# EUROPEAN PATENT APPLICATION

(11) **EP 1 632 514 A1**
(43) Date of publication of application: **08.03.2006**
(21) Application number: 04734339.7
(22) Date of filing: 21.05.2004
(51) Int. Cl.: C08G 18/73, G06F 3/02, B29C 43/02, B29C 51/10, B29K 75/00

(54) **KEYPAD MADE FROM THERMOPLASTIC POLYURETHANE RESIN AND METHOD FOR FORMING THEREOF**

(30) Priority: 28.05.2003 JP 2003150240
(71) Applicant: Nippon Polyurethane Industry Co., Ltd., Tokyo 108-0014 (JP)
(72) Inventor: MATSUDA, H., c/o Nippon Polyurethane Ind. Co., Ltd, Yokohama-shi, Kanagawa 2450052 (JP); TSUNODA, S., c/o Nippon Polyurethane Ind. Co., Ltd, Shunan-shi, Yamaguchi 7468711 (JP); HOSHINO, K., c/o Nippon Polyurethane Ind. Co., Ltd, Yokohama-shi, Kanagawa 2450052 (JP)
(74) Representative: Hollatz, Christian
(86) International application number: PCT/JP2004/006930
(87) International publication number: WO 2004/106401

(57) **Abstract**

A keypad of TPU obtained from a TPU sheet by thermoforming, wherein said TPU sheet is a melt-formed product of resin pellets resulting from reaction between an organic diisocyanate (A) composed mainly of hexamethylenediisocyanate (A1), a high-molecular weight polyol (B) composed mainly of polycarbonate diol (B1), and a chain extender (C) composed mainly of an aliphatic diol (C1) having 2 to 10 carbons. The TPU used in the present invention excels in secondary formability, oleic acid resistance, discoloration resistance, clarity, and printability.

## Description

### TECHNICAL FIELD

The present invention relates to a keypad of thermoplastic polyurethane resin and it's forming method. More particularly, the present invention relates to a keypad of thermoplastic polyurethane resin excelling in secondary formability, oleic acid resistance, discoloration resistance, clarity, and printability, and it's forming method.

### BACKGROUND ART

Thermoplastic polyurethane resin (TPU for short hereinafter) has long been used in a variety of applications including paint, adhesive, roll, tube, and binder for magnetic recoding medium. It also finds use as synthetic leather, film, and molding sheet because of its better low-temperature properties, flexibility, and durability than other resins.

Among others, hot-molded TPU sheets are used as skin for automotive steering wheels and automotive instrument panels, bust cups for brassieres and swimsuits, keypads for electronic machines and equipment, trays for electronic parts, air mats, water beds, and various protective cases.

Those hot-molded TPU sheets mentioned above are usually used in direct contact with the human body or in the direct sunlight. Therefore, TPU for hot-molded sheets is required to have good secondary formability as well as oleic acid resistance and discoloration resistance. (Oleic acid resistance is a measure of resistance to human sweat.) It is also required to have good clarity and printability because formed products often need a good appearance.

Patent Document 1 discloses a TPU sheet excelling in dry touch properties and oleic acid resistance. Also, Patent Document 2 discloses a TPU powder for slush molding which is composed of adipate polyester and polycarbonate diol (PCD for short hereinafter).

Being produced from aromatic diisocyanate and organic solvent, the TPU disclosed in Patent Document 1 lacks discoloration resistance and poses a problem with environmental pollution with waste liquid and solvent vapor. In addition, slush molding is not suitable for precision molding.
Patent Document 1:
   Japanese Patent Laid-Open No. 2001-187811
Patent Document 2:
   Japanese Patent Laid-Open No. Hei 6-206973

The present invention was completed in view of the foregoing. It is an object of the present invention to provide a keypad of thermoplastic polyurethane resin excelling in secondary formability, oleic acid resistance, discoloration resistance, clarity, and printability.

### DISCLOSURE OF INVENTION

The present invention covers a keypad of thermoplastic polyurethane resin excelling in secondary formability, oleic acid resistance, discoloration resistance, clarity, and printability. This object is achieved by using a TPU of specific composition.

The TPU disclosed in the present invention will find use not only as keypad but also as skin for automotive steering wheels and automotive instrument panels, bust cups for brassieres and swimsuits, keypads for electronic machines and equipment, trays for electronic parts, air mats, water beds, and various protective cases.

### BRIEF DESCRIPTION OF DRAWINGS

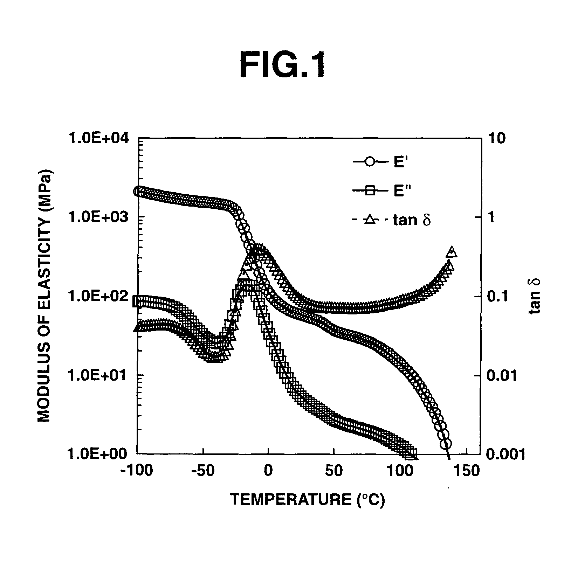

Fig. 1 is a diagram showing the results of measurement of the viscoelastic properties of PU-2.

### Legend of symbols:

○: Storage modulus (E')
□: Loss modulus (E")
Δ: Loss modules (E")/Storage modules (E') (tan δ))

### BEST MODE FOR CARRYING OUT THE INVENTION

The present invention is directed to any one of the following.
(1) A keypad of TPU obtained from a TPU sheet by thermoforming, wherein the TPU sheet is a melt-formed product of resin pellets resulting from reaction between an organic diisocyanate (A) composed mainly of hexamethylenediisocyanate (A1), a high-molecular weight polyol (B) composed mainly of polycarbonate diol (B1), and a chain extender (C) composed mainly of an aliphatic diol (C1) having 2 to 10 carbons.
(2) A method for thermoforming a keypad which includes vacuum forming the TPU sheet defined in (1) above.
(3) A method for thermoforming a keypad which includes stamping the TPU sheet defined in (1) above.

A detained description of the present invention will be given below.

The terms used in the present invention are defined as follows.

"Thermoformable sheet" is defined as a sheet of synthetic resin which is to undergo thermoforming which includes vacuum forming, stamping, compressed-air forming, etc. "Primary forming" is defined as a step of forming a sheet from pellets. "Secondary forming" is defined as a step of forming a keypad from the sheet just mentioned above. "Composed mainly of" means that each component, for example (A), contains its subscomponent, for example (A1) accounting for no less than 50 wt%.

The raw materials used in the present invention are described in the following.

The organic diisocyanate (A) used in the present invention is one which is composed mainly of hexamethylenediisocyanate (A1) (abbreviated as HDI hereinafter). If the major component of the organic diisocyanate (A) is any other isocyanate than HDI (A1), the resulting TPU pellets will be poor in discoloration resistance and secondary formability. Incidentally, good secondary formability implies the capability of precision forming. The sheet of TPU pellets according to the present invention is applicable to the cover of small (palm-size) electronic instruments (e.g., the cover with key switches for card-type calculator and remote control for TV set and video deck).

In the present invention, the HDI (A1) may be used in combination with other organic diisocyanates exemplified below. 2,4-tolylenediisocyanate, 2,6-tolylenediisocyanate, xylene-1,4-diisocyanate, xylene-1,3-diisocyanate, tetramethylxylenediisocyanate, 4,4'-diphenylmethanediisocyanate, 2,4'-diphenymethanediisocyanate, 2,2'-diphenylmethanediisocyanate, 4,4'-diphenyletherdiisocyanate, 2-nitrophenyl-4,4'-diisocyanate, 2,2'-diphenylpropane-4,4'-diisocyanate, 3,3'-dimethyldiphenylmethane-4,4'-diisocyanate, 4,4'-diphenylpropanediisocyanate, m-phenylenediisocyanate, p-phenylenediisocyanate, naphthylene-1,4-diisocyanate, naphthylene-1,5-diisocyanate, 3,3'-dimethoxydiphenyl-4,4'-diisocyanate, and other aromatic diisocyanates; tetramethylenediisocyanate, decamethylenediisocyanate, lysinediisocyanate, and other aliphatic diisocyanates; and isophoronediisocyanate, hydrogenated tolylenediisocyanate, hydrogenated xylenediisocyanate, hydrogenated diphenylmethanediisocyanate, hydrogenated tetramethylxylenediisocyanate, and other alicyclic diisocyanates.

The content of the subcomponent (A1) in the component (A) should be no less than 70 wt%, preferably no less than 80 wt%, so that the resulting TPU has good weather resistance, flexibility, and hand.

According to the present invention, the high-molecular weight polyol (B) is composed mainly of PCD (B1), which is usually obtained from a low-molecular weight diol and a low-molecular weight carbonate by condensation reaction.

The low-molecular weight diol includes, for example, ethylene glycol, 1,3-proylene glycol, 1,2-propylene glycol, 1,2-butanediol, 1,3-butanediol, 1,4-butanediol (1,4-BD for short hereinafter), 2-methyl-1,3-propanediol, 1,5-pentanediol, 1,6-hexandiol (1,6-HD for short hereinafter), 3-methyl-1,5-pentanediol (MPD for short hereinafter), neopentylglycol, 1,8-octanediol, 1,9-nonanediol, 3,3-dimethylolheptane, diethylene glycol, 1,4-cyclohexanediol, 1,4-cyclohexanedimethanol, 2-ethyl-1,3-propanediol, 2-n-propyl-1,3-propanediol, 2-isopropyl-1,3-propanediol, 2-n-butyl-1,3-propanediol, 2-isobutyl-1,3-propanediol, 2-tert-butyl-1,3-propanediol, 2-methyl-2-ethyl-1,3-propanediol, 2,2-diethyl-1,3-propanediol, 2-ethyl-2-n-propyl-1,3-propanediol, 2-ethyl-2-n-butyl-1,3-propanediol, 2-ethyl-3-ethyl-1,4-butanediol, 2-methyl-3-ethyl-1,4-butanediol, 2,3-diethyl-1,5-pentanediol, 2,4-diethyl-1,5-pentanediol, 2,3,4-triethyl-1,5-pentanediol, dimethylolpropionic acid, dimethylolbutanoic acid, dimer acid diol, and alkylene oxide adduct of bisphenol A. The low-molecular weight polyol constituting PCD should preferably be aliphatic low-molecular weight diols with 2 to 10 carbons so that the resulting TPU sheet has good clarity and printability. Of the low-molecular weight diols, MPD is most desirable because the resulting TPU sheet exhibits good clarity and printability with very little bleeding.

The low-molecular weight carbonate includes dialkyl carbonate (such as dimethyl carbonate and diethyl carbonate), diaryl carbonate (such as diphenyl carbonate), and alkylene carbonate (such as ethylene carbonate and propylene carbonate).

The high-molecular weight polyol (B) should have a number-average molecular weight of 500 to 5,000, preferably 1,000 to 3,000. With a number-average molecular weight smaller than 500 or larger than 5,000, the resulting TPU will be poor in flexibility or mechanical strength, respectively.

If the high-molecular weight polyol (B) has its major constituent replaced with any other high-molecular weight polyol than (B1), such as polyether polyol or polyester polyol, the resulting TPU will be poor in heat resistance or water resistance, respectively.

Any other high-molecular weight polyol than PCD (B1) that can be used in combination without decrease in durability includes, for example, polyester polyol, polyether polyol, polyether-ester polyol, and polyolefin polyol.

The chain extender (C) used in the present invention is composed mainly of aliphatic diol (C1) having 2 to 10 carbons. Examples of (C1) include ethylene glycol, 1,3-proylene glycol, 1,2-propylene glycol, 1,2-butanediol, 1,3-butanediol, 1,4-BD, 2-methyl-1,3-propanediol, 1,5-pentanediol, 1,6-HD, MPD, neopentylglycol, 1,8-octanediol, 1,9-nonanediol, 3,3-dimethylolheptane, diethylene glycol, 1,4-cyclohexanediol, 1,4-cyclohexanedimethanol, 2-ethyl-1,3-propanediol, 2-n-propyl-1,3-propanediol, 2-isopropyl-1,3-propanediol, 2-n-butyl-1,3-propanediol, 2-isobutyl-1,3-propanediol, 2-tert-butyl-1,3-propanediol, 2-methyl-2-ethyl-1,3-propanediol, 2,2-diethyl-1,3-propanediol, 2-ethyl-2-n-propyl-1,3-propanediol, 2-ethyl-2-n-butyl-1,3-propanediol, 2-ethyl-3-ethyl-1,4-butanediol, 2-methyl-3-ethyl-1,4-butanediol, 2,3-diethyl-1,5-pentanediol, and 2,4-diethyl-1,5-pentanediol. Of the above-mentioned examples, aliphatic diols having 2 to 6 carbons are preferable and 1,4-BD is most desirable, from the standpoint of the mechanical strength of the resulting TPU. If the chain extender (C) has its major component (C1) replaced with a low-molecular weight compound containing active hydrogen groups, the resulting TPU will be poor in formability (including secondary formability), clarity, and mechanical strength. Those chain extenders which can be used in addition to (C1) are low-molecular weight polyamines having a number-average molecular weight smaller than 500, such as ethylenediamine, hexamethylenediamine, xylylenediamine, isophoronediamine, and ethylenetriamine, and low-molecular weight aminoalcohols having a number-average molecular weight smaller than 500, such as monoethanolamine, diethanolamine, and monopropanolamine.

TPU pellets for the keypad of the present invention may be produced in any way without specific restrictions so long as they rely on the above-mentioned raw materials (A) to (C). They may be produced by any one of the following process which consists of: mixing the high-molecular weight polyol (B) and the chain extender (C) and then mixing the resulting mixture with the organic diisocyanate (A); metering and vigorously mixing the above-mentioned raw materials, and pouring the resulting mixture into a vat for reaction therein at 50 to 200°C, preferably 60 to 160°C; kneading and polymerizing the above-mentioned raw materials in an extruder at 80 to 250°C, preferably 120 to 250°C, and extruding the resulting TPU through a die; or supplying the above-mentioned raw materials all at once to a kneader for reaction therein at 80 to 250°C, preferably 120 to 230°C. The product obtained by the foregoing process is made into strand cut pellets of TPU. If necessary, the processed materials may be recycled or aged for complete reaction. Extrusion is desirable for continuous production. TPU in pellet form gives off (1) no dust unlike powder, (2) facilitates storage and transportation unlike solvent solutions, and (3) permits easy molding into various shapes.

A urethane-forming catalyst is not essential in the production of TPU pellets; however it should preferably be used to reduce reaction time and to ensure complete reaction. It is possible to use any common catalyst, such as organic compounds or inorganic compounds of bismuth, lead, tin, iron, antimony, uranium, cadmium, cobalt, thorium, aluminum, mercury, zinc, nickel, cerium, molybdenum, vanadium, copper, manganese, zirconium, or calcium. Preferred catalysts are organometal compounds, particularly dialkyltin compounds. Typical organotin catalysts include, for example, stannous octoate, stannous oleate, dibutyltin diacetate, dibutyltin dilaurate, dibutyltin maleate, dibutyltin mercaptopropionate, and dibutyltin dodecylmercaptide. The amount of the catalyst may vary without restrictions, depending on the properties of raw materials, the reaction condition, and the reaction time. It is usually 0.0001 to 5 wt%, preferably about 0.001 to 2 wt%, of the total amount of the reaction mixture.

The polyol (B) and the chain extender (C) should be fed in a molar ratio (C)/(B) of from 0.5 to 5, particularly from 1 to 3. With an excessively small or large value of (C)/(B), the resulting TPU will be poor in mechanical strength or formability (including secondary formability), respectively.

The raw materials should be fed in such a way that the molar ratio of active hydrogen groups to isocyanate groups is equal to or larger than 0.8/1 and smaller than 1/1, preferably equal to or larger than 0.85/1 and equal to or smaller than 0.99/1. If the molar ratio is smaller than the lower limit, the resulting TPU will be poor in mechanical strength because of its small molecular weight. If the molar ratio is larger than the upper limit, the resulting TPU will be poor in appearance due to fish-eyes.

The thus obtained TPU should have a weight-average molecular weight of 5,000 to 1,000,000, preferably 10,000 to 500,000. It will be poor in strength or formability if its molecular weight is smaller or larger than these limits, respectively. Incidentally, the weight-average molecular weight is expressed in terms of that of polystyrene measured by gel permeation chromatography (GPC).

The TPU should have a hardness "A" of 70 to 98, preferably 80 to 95, as prescribed in JIS-K7311. Because of this hardness, TPU feels hard if it is in solid form but feels elastic if it is in thin form.

Incidentally, the TPU according to the present invention is exempt from fire protection law for its storage because it is produced without organic solvents. In addition, it does not cause environmental pollution during its fabrication.

The TPU of the present invention may be incorporated with a variety of additives such as slip agent, hydrolysis preventing agent, antioxidant, UV light absorber, UV light stabilizer, filler, and reinforcing fibers, if necessary.

The keypad of the present invention is produced by making the TPU pellets mentioned above into a film or sheet, 0.03 to 5 mm thick, and then forming the film or sheet into a desired shape by vacuum forming or stamping. In this way it is possible to easily obtain precision thin formings such as keypad for electronic instruments.

Vacuum forming may be accomplished as follows. First, the sheet which has been made from the TPU as mentioned above is heated and softened. The softened sheet is brought into close contact with the mold under vacuum. After cooling, the formed sheet is demolded and trimmed (if necessary).
Stamping may be accomplished as follows. First, the sheet which has been made from the TPU as mentioned above is heated and softened. The softened sheet is clamped between female and male molds under vacuum. After cooling, the formed sheet is demolded and trimmed (if necessary). In either case, the heating temperature of the sheet should preferably be 60 to 250° C .

### EXAMPLES

The invention will be described in more detail with reference to the following examples and comparative examples, which are not intended to restrict the scope thereof. In Examples and Comparative Examples, "%" means "wt%".

### [Preparation of thermoplastic polyurethane resin]

### Synthesis Example 1

A mixing tank (capable of temperature control) was charged with 932.3 kg of polyol A and 67.7 kg of 1,4-BD. After thorough mixing, the mixture liquid was heated to 60°C. The mixture liquid was transferred to a head tank, in which it was heated to 75°C. The mixture liquid was continuously fed, together with HDI, to a twin-screw extruder having its temperature adjusted as follows. A vicinity of hopper: 160° C, a middle part: 190°C, and a forward end: 225°C. The feeding rate of the mixture liquid was 2447 g/min, and the feeding rate of the HDI was 553 g/min. The molten resin was discharge through a strand die and the resulting strand was cut into pellets after cooling. After ageing at 25°C for 3 days, there was obtained a sample of thermoplastic polyurethane resin pellets which is designated as PU-1. The resin feed amount was 180 kg/h.

### Synthesis Examples 2 to 5 and Synthesis Comparative Examples 1 to 3

The same procedure as in Synthesis Example 1 was repeated to give samples (PU-2 to PU-8) of thermoplastic polyurethane resin except that the formulation was changed as shown in Tables 1 and 2.

**Table 1**

| | | Synthesis Example | | | | |
|---|---|---|---|---|---|---|
| | | 1 | 2 | 3 | 4 | 5 |
| Mixing tank | High-molecular weight polyol (kg) | | | | | |
| | Polyol A | 932.3 | 914.4 | | | 932.3 |
| | Polyol B | | | 857.3 | | |
| | Polyol C | | | | 857.3 | |
| | Chain extender (kg) | | | | | |
| | 1,4-BD | 67.7 | 85.6 | 142.7 | 142.7 | 67.7 |
| Feed rate of mixture fluid (g/min) | | 2,447 | 2,387 | 2,139 | 2,139 | 2,430 |
| Feed rate of organic diisocyanate (g/min) | | | | | | |
| HDI | | 553 | 613 | 861 | 861 | 570 |
| NCO/OH molar ratio | | 0.98 | 0.98 | 0.98 | 0.98 | 1.02 |
| Sample designation of TPU | | PU-1 | PU-2 | PU-3 | PU-4 | PU-5 |
| Result | | | | | | |
| Weight-average M. W. | | 87,000 | 92,000 | 82,000 | 83,000 | 150,000 |
| Melt viscosity (Pa·s) | | 1,200 | 2,000 | 1,000 | 1,100 | 9,000 |

**Table 2**

| | | Synthesis Comparative Example | | |
|---|---|---|---|---|
| | | 1 | 2 | 3 |
| Mixing tank | High-molecular weight polyol (kg) | | | |
| | Polyol B | | | 857.3 |
| | Polyol C | 857.3 | | |
| | Polyol D | | 857.3 | |
| | Chain extender (kg) | | | |
| | 1,4-BD | 142.7 | 142.7 | 142.7 |
| Feed rate of mixture fluid (g/min) | | 1,877 | 1,877 | 1,843 |
| Feed rate of organic diisocyanate (g/min) | | | | |
| MDI | | 1,123 | 1,123 | |
| H₁₂MDI | | | | 1,204 |
| NCO/OH molar ratio | | 0.98 | 0.98 | 0.98 |
| Sample designation of TPU | | PU-6 | PU-7 | PU-8 |
| Result | | | | |
| Weight-average M. W. | | 105,000 | 106,000 | 121,000 |
| Melt viscosity (Pa·s) | | 2,200 | 2,500 | 4,800 |

Description of components and properties in Application Examples 1 to 5 and Application Comparative Examples 1 to 3 and Tables 1 and 2.
Polyol A:
   Polycarbonate diol obtained from 3-methyl-1,5-pentanediol and diethyl carbonate
   Number-average molecular weight = 1,500
Polyol B:
   Polycarbonate diol obtained from 3-methyl-1,5-pentanediol and diethyl carbonate
   Number-average molecular weight = 1,000
Polyol C:
   Polycarbonate diol obtained from 1,6-hexanediol and diethyl carbonate
   Number-average molecular weight = 1,000
Polyol D:
   Polyester diol obtained from 1,4-butanediol and adipic acid
   Number-average molecular weight = 1,000
1,4-BD: 1,4-butandiol
HDI: Hexamethylene diisocyanate
MDI: 4,4'-diphenylmethanediisocyanate
H₁₂MDI: Hydrogenated diphenylmethanediisocyanate
TPU: Thermoplastic polyurethane resin
Number-average molecular weight
   Measured by using a GPC apparatus: Model HLC-8020, from TOSOH CORPORATION
   Solution: DMF solution (1%)
   Analytical curve: polystyrene analytical curve
Melt viscosity
   Measuring instrument: flow tester, Model CFT 500C (from SHIMADZU CORPORATION)
   Measuring temperature: 180°C
   Die: 1 mm in diameter
   1 mm long
   Preheating: 240 seconds
   Load: 98 N
   Amount of sample: 2 g

### [Evaluation of polyurethane resin]

### Reference Examples 1 to 5 and Reference Comparative Examples 1 to 3

Each of the samples, PU-1 to PU-8, was made into a sheet (0.2 mm thick) by extrusion and the resulting sheet was evaluated. The stock temperature was 180°C and the T-die temperature was 170°C. The results of evaluation are shown in Tables 3 and 4. The sample PU-2 was tested for dynamic viscoelasticity. The results of the test are shown in Fig. 1.

**Table 3**

| | Reference Example | | | | |
|---|---|---|---|---|---|
| | 1 | 2 | 3 | 4 | 5 |
| TPU | PU-1 | PU-2 | PU-3 | PU-4 | PU-5 |
| Film appearance | ○ | ○ | ○ | ○ | ○ |
| Weather resistance | ○ | ○ | ○ | ○ | ○ |
| Hydrolysis resistance | ○ | ○ | ○ | ○ | ○ |
| Oleic acid resistance | ○ | ○ | ○ | ○ | ○ |
| JIS-A hardness | 85 | 90 | 96 | 95 | 86 |
| Strength at rupture (MPa) | 49 | 57 | 56 | 55 | 51 |
| Elongation at rupture (%) | 770 | 610 | 650 | 630 | 760 |
| Printability | | | | | |
| Vacuum forming | ○ | ○ | ○ | ○ | ○ |
| Stamping | ○ | ○ | ○ | ○ | ○ |
| Secondary formability | | | | | |
| Vacuum forming | ○ | ○ | ○ | ○ | ○ |
| Stamping | ○ | ○ | ○ | ○ | ○ |

**Table 4**

| | Reference Comparative Example | | |
|---|---|---|---|
| | 1 | 2 | 3 |
| TPU | PU-6 | PU-7 | PU-8 |
| Film appearance | ○ | ○ | ○ |
| Weather resistance | × | × | ○ |
| Hydrolysis resistance | ○ | × | ○ |
| Oleic acid resistance | ○ | ○ | × |
| JIS-A hardness | 85 | 86 | 85 |
| Strength at rupture (MPa) | 49 | 50 | 57 |
| Elongation at rupture (%) | 560 | 680 | 430 |
| Printability | | | |
| Vacuum forming | ○ | ○ | ○ |
| Stamping | ○ | ○ | ○ |
| Secondary formability | | | |
| Vacuum forming | ○ | ○ | × |
| Stamping | ○ | ○ | × |

### Appearance:

Resin samples were visually observed and rated according to the following criterion.
○: clear with no fish-eyes.
Δ: clear with some fish-eyes.
×: cloudy with bleeding and fish-eyes.

### Weather resistance:

Measured according to JIS K7350

Irradiate with light from a xenon lamp for 2000 hours.
○: ΔYI < 10
×: ΔYI ≥ 10

### Oleic acid resistance:

Evaluated in terms of decrease in the strength at rupture which was measured after the sample sheet had been immersed in oleic acid at 70°C for 24 hours.

Rated according to the following criterion.
○: decrease less than 50%
×: decrease no less than 50%

### Hydrolysis resistance:

Evaluated in terms of the strength at rupture which was measured according to JIS K7311 after the sample had been allowed to stand in an atmosphere at 85°C and 95 %RH for 30 days.

### Hardness, strength at rupture, and elongation at rupture:

Measured according to JIS K7311

### Secondary formability and printability:

Printing was performed on that side of the sheet sample which became concave after forming. After coating, the sheet sample underwent vacuum forming and stamping. The resulting product was visually examined for printing and drawing.
Printability:
○: no deformation in printing
×: deformation in printing

Secondary formability:
○: with sharp edges
×: without sharp edges

Conditions of vacuum forming:
Sheet heating temperature: 140° C
Vacuum pressure: 1.3 kPa
Forming time: 20 seconds

Conditions of stamping:
Sheet heating temperature: 140°C
Press pressure: 10 MPa
Pressing time: 10 seconds

Dynamic viscoelasticity
Measuring instrument: Rheovibron DDV-01FP (A&D Co.,LTD)
Under the following conditions
Starting temperature: -100°C
Rate of temperature rise: 2°C/min
Specimen
Wide: 4 mm
Long: 25 mm
Thick: 200 µm
Dynamic displacement: 16 µm
Frequency: 11 Hz
Automatic load: 6.1 × 10⁻² N

TPU in Reference Examples 1 to 5 gave good results in all the tests. In Reference Comparative Examples, however, the samples PU-6 and PU-7 prepared from MDI as an organic diisocyanate were poor in weather resistance, the sample PU-7 prepared from polyester polyol was poor in hydrolysis resistance, and the sample PU-8 prepared from H₁₂MDI was poor in secondary formability.

### [Evaluation of polyurethane resin keypad]

### Examples 1 to 5

The polyurethane resin film was formed into keypad by vacuum forming or stamping under the conditions mentioned above, and the resulting keypad was evaluated. The results of evaluation are shown in Table 5.

**Table 5**

| | Example | | | | |
|---|---|---|---|---|---|
| | 1 | 2 | 3 | 4 | 5 |
| TPU | PU-1 | PU-2 | PU-3 | PU-4 | PU-5 |
| Vacuum forming | | | | | |
| Depressability | ○ | ○ | ○ | ○ | ○ |
| Key interference | ○ | ○ | ○ | ○ | ○ |
| Stamping | | | | | |
| Depressability | ○ | ○ | ○ | ○ | ○ |
| Key interference | ○ | ○ | ○ | ○ | ○ |

| | | | | | |
|---|---|---|---|---|---|
| Depressability: Evaluated by visually observing whether the keypad is broken or damaged when strongly depressed straight with a fingernail, and rated according to the following criterion. ○: break and damage are not observed. ×: break and damage are observed. | | | | | |
| Key interference: Evaluated by observing whether depressing one key affects its adjacent key. ○: adjacent key is moved very little. ×: adjacent key is moved greatly. | | | | | |

It is noted from Table 5 that the polyurethane resin keypad of the present invention exhibits good performance.

## Claims

1. A keypad of polyurethane resin obtained from a thermoplastic polyurethane resin sheet by thermoforming, wherein said thermoplastic polyurethane sheet is a melt-formed product of resin pellets resulting from reaction between an organic diisocyanate (A) composed mainly of hexamethylenediisocyanate (A1), a high-molecular weight polyol (B) composed mainly of polycarbonate diol (B1), and a chain extender (C) composed mainly of an aliphatic diol (C1) having 2 to 10 carbons.

2. The method for thermoforming the keypad which comprises vacuum forming the thermoplastic polyurethane resin sheet defined in claim 1.

3. The method for thermoforming the keypad which comprises stamping the thermoplastic polyurethane resin sheet defined in claim 1.
